# EUROPÄISCHE PATENTANMELDUNG

(11) **EP 3 032 864 A1**
(43) Veröffentlichungstag der Anmeldung: **15.06.2016**
(21) Anmeldenummer: 15196373.3
(22) Anmeldetag: 25.11.2015
(51) Int. Cl.: H04W 24/02, H04W 28/22, H04W 84/00, H04W 84/04

(54) **VORRICHTUNGEN, VERFAHREN UND COMPUTERPROGRAMME FÜR EINEN ANBINDUNGS-SENDEEMPFÄNGER UND EINEN BASISSTATIONS-SENDEEMPFÄNGER EINES RELAY-SENDEEMPFÄNGERS, RELAY-SENDEEMPFÄNGER UND FAHRZEUG MIT EINEM RELAY-SENDEEMPFÄNGER**

(30) Priorität: 26.11.2014 DE 102014117360
(71) Anmelder: Nash Technologies GmbH, 90491 Nürnberg (DE)
(72) Erfinder: Keuker, Claus, 82327 Tutzing (DE)
(74) Vertreter: 2SPL Patentanwälte PartG mbB

(57) **Zusammenfassung**

Ausführungsbeispiele beziehen sich auf eine Vorrichtung (10), ein Verfahren und ein Computerprogramm für einen Anbindungs-Sendeempfänger (100) eines Relay-Sendeempfängers (300) in einem Mobilkommunikationssystem (400), eine Vorrichtung (20), ein Verfahren und ein Computerprogramm für einen Basisstations-Sendeempfänger (200) eines Relay-Sendeempfängers (300) in einem Mobilkommunikationssystem (400), ein Relay-Sendeempfänger (300) mit einem Anbindungs-Sendeempfänger (100) und einem Basisstations-Sendeempfänger (200), sowie ein Fahrzeug mit einem Relay-Sendeempfänger (300). Die Vorrichtungen (10, 20) für den Anbindungs-Sendeempfänger (100) und den Basisstations-Sendeempfänger (200) sind ausgebildet, um eine Kapazität auf einer Zugriffsverbindung (220) zwischen dem Basisstations-Sendeempfänger (200) des Relay-Sendeempfängers (300) und einem mobilen Sendeempfänger (500) an eine Kapazität einer Anbindungsverbindung (120) zwischen dem Anbindungs-Sendeempfänger (100) und einem weiteren Basisstations-Sendeempfänger (210) des Mobilkommunikationssystem anzupassen.

## Beschreibung

Ausführungsbeispiele stellen Vorrichtungen, Verfahren und Computerprogramme für einen Anbindungs-Sendeempfänger und einen Basisstations-Sendeempfänger eines Relay-Sendeempfängers, einen Relay-Sendeempfänger und ein Fahrzeug mit einem Relay-Sendeempfänger bereit, insbesondere aber nicht ausschließlich, stellen Ausführungsbeispiele ein Konzept zur Funkressourcenverwaltung für mobile Relay-Sendeempfänger bereit.

Mobilkommunikationssysteme stehen vor immer neuen Herausforderungen: Moderne Smartphones (intelligente portable Endgeräte) ermöglichen die Nutzung einer Vielzahl neuer Dienste, wie z.B. Online-Navigation, Musik- oder Videostreaming, Online-Kommunikation und mobiles Internet. Da diese Dienste oft einen großen Teil der Funktionalität eines Smartphones ausmachen, müssen die Netzbetreiber versuchen, eine möglichst weite Abdeckung eines Mobilkommunikationssystems zu erreichen.

Neben den kabelgebundenen Basisstations-Sendeempfängern, die über ein Kabel an das Netz des Netzbetreibers angebunden sind, gibt es auch Relay-Sendeempfänger, die selbst eine kabellose Verbindung zum Mobilkommunikationssystem herstellen und dann eine schnurlose Verbindung mobilen Sendeempfängern bereitstellen. Dabei können Relay-Sendeempfänger meist durch größere Antennen, eine bessere Stromversorgung und einen günstigeren Standort (z.B. auf einem Berg oder mit Antennen außerhalb eines Fahrzeugs) eine bessere Verbindung zu einem Mobilkommunikationssystem herstellen als die mobilen Endgeräte selbst, und die Anbindung der mobilen Sendeempfänger an das Mobilkommunikationssystem verbessern.

Gerade in Fahrzeugen, sei es auf dem Weg zur Arbeit oder beim Reisen, werden mobile Breitbanddienste oft genutzt. So ist der Bedarf an Breitband-Internet innerhalb von Fahrzeugen in den letzten Jahren stark gestiegen, da viele Kunden auch beim Reisen nicht auf Internet-basierte Unterhaltungsdienste verzichten wollen. Allerdings sind die Mobilfunksignale, die innerhalb von Fahrzeugen empfangen werden, signifikant abgeschwächt durch die Dämpfung, die das Signal durch die Hülle des Fahrzeugs erfährt. Dadurch leidet die Empfangsqualität und es gibt eine Vielzahl an unterbrochenen Anrufen innerhalb des Fahrzeugs. Dieses Problem kann sich in Zukunft weiter verschärfen, wenn die Hersteller, aus Emissionsgründen, auf Metallfilm-Fenster umsteigen, die das Fahrzeug annähernd in einen Faraday-Käfig verwandeln. Auch hier können in Zukunft mobile Relay-Sendeempfänger benötigt werden, um den Insassen des Fahrzeugs eine verbesserte Empfangsqualität zur Verfügung zu stellen.

Die Relay-Sendeempfänger selbst werden dann über einen Basisstations-Sendeempfänger an das Mobilkommunikationssystem angeschlossen. Im Bereich der schon eingeführten heterogenen Netzwerkstrukturen gibt es kleine Zellen, auch engl. "small cells", die zur Erweiterung der Netzwerkkapazitäten eingesetzt werden und die im Vergleich zu den zumeist anfänglich flächendeckend implementierten Makrozellen, auch engl. "macro cells", einen kleineren Abdeckungsbereich haben. Dabei sehen manche Konzepte vor, auch den Innenraum eines Kraftfahrzeugs mit einer sogenannten mobilen kleinen Zelle, die auch Femtozelle oder engl. "femto cell" genannt wird, zu versorgen. In dem Kraftfahrzeug befindliche Mobilfunkendgeräte buchen sich dann bei dieser Femtozelle ein, die rückseitig wiederum über eine Funkverbindung mit einer Basisstation des Mobilfunksystems kommuniziert und somit für eine Anbindung der Femtozelle an das Mobilfunksystem sorgt. In diesem Zusammenhang wird auch von mobiler Relaystation oder mobilem Relay-Sendempfänger gesprochen.

Hier und im Folgenden werden daher bei einem mobilen Relay-Sendeempfänger zwei Verbindungen unterschieden. Eine Zugriffverbindung existiert zwischen einem mobilen Endgerät und einem in den mobilen Relay-Sendeempfänger integrierten Basisstations-Sendeempfänger, der z.B. eine Femtozelle im Inneren eines Fahrzeugs generiert über die im Inneren des Fahrzeugs befindliche mobile Endgeräte sich diverser Schnurlosdienste bedienen können. Darüber hinaus existiert eine Anbindungsverbindung zwischen einem in den mobilen Relay-Sendeempfänger integrierten Anbindungs-Sendeempfänger und einem festen Basisstations-Sendeempfänger des Mobilfunksystems, zur Anbindung des mobilen Relay-Sendeempfängers an das Mobilkommunikationssystem, wobei diese Verbindung auch mehrere (mobile) Relaystationen involvieren kann. Die Anbindung des mobilen Relay-Sendeempfängers erfolgt demnach ebenfalls über eine Schurlosverbindung.

Es besteht daher der Bedarf, ein verbessertes Konzept für Relay-Sendeempfänger bereitzustellen.

Diesem Bedarf wird durch eine Vorrichtung gemäß einem der Ansprüche 1 oder 6, einen Relay-Sendeempfänger gemäß Anspruch 9, ein Fahrzeug gemäß Anspruch 10, ein Verfahren gemäß einem der Ansprüche 12 oder 13 sowie einem Computerprogramm gemäß Anspruch 14 Rechnung getragen.

Ausführungsbeispiele können zur Verbesserung des Durchsatzes oder der Qualität von Schnurlosverbindungen über Relay-Sendeempfänger beitragen, wie sie beispielsweise beim Einsatz von mobilen Relay-Sendeempfängern in Fahrzeugen vorkommen. Mobile Relay-Sendeempfänger können z.B. in einem Auto, einem Bus, einem Zug, einem Flugzeug, einem Schiff oder einem anderen Verkehrsmittel oder Fahrzeug eingesetzt werden. Ausführungsbeispiele basieren auf der Erkenntnis, dass bei solchen mobilen Relay-Sendeempfängern die Anbindungsverbindung, also diejenige Verbindung, die den Relay-Sendeempfänger an die fest installierten Komponenten des Mobilfunknetzes anbindet, den Schwankungen und Effekten des Radiokanals unterworfen ist, und dass diese Schwankungen insbesondere stärker sein können, als die Schwankungen einer Zugriffsverbindung zwischen dem Relay-Sendeempfänger und einem mobilen Sendeempfänger, wie z.B. einem Endgerät im Inneren eines Fahrzeugs.

Ausführungsbeispiele schaffen daher eine Vorrichtung für einen Anbindungs-Sendeempfänger eines Relay-Sendeempfängers in einem Mobilkommunikationssystem. Der Relay-Sendeempfänger weist ferner einen Basisstations-Sendeempfänger auf. In anderen Worten kann sich der Relay-Sendeempfänger aus einem Anbindungs-Sendeempfänger, zur Anbindung an das Mobilkommunikationssystem (auch engl. "Backhaul" oder "Backhaulmodem"), und einem Basisstations-Sendeempfänger zur Kommunikation mit mobilen Sendeempfängern über eine Zugriffsverbindung (auch engl. "Access link") und zur Bereitstellung einer Funkzelle, zusammensetzen.

Die Vorrichtung umfasst zumindest ein Sendeempfängermodul, das ausgebildet ist, um mit zumindest einem weiteren Basisstations-Sendeempfänger, z.B. einem festen Basisstations-Sendeempfänger, zur Anbindung des Mobilkommunikationssystems über die Anbindungsverbindung zu kommunizieren. Die Vorrichtung umfasst ferner eine Schnittstelle, die ausgebildet ist, um mit dem Basisstations-Sendeempfänger des Relay-Sendeempfängers zu kommunizieren. Darüber hinaus weist die Vorrichtung ein Kontrollmodul auf, das ausgebildet ist, um über das Sendeempfängermodul Information bezüglich einer Kapazität der Anbindungsverbindung zu bestimmen und um über die Schnittstelle die Information bezüglich der Kapazität an den Basisstations-Sendeempfänger des Relay-Sendeempfängers zu kommunizieren. Ausführungsbeispiele können daher einem Anbindungs-Sendeempfänger eines Relay-Sendeempfängers erlauben, Information über eine Kapazität einer Anbindungsverbindung zu bestimmen und bereitzustellen.

Ausführungsbeispiele schaffen darüber hinaus eine Vorrichtung für einen Basisstations-Sendeempfänger eines Relay-Sendeempfängers in einem Mobilkommunikationssystem, wobei der Relay-Sendeempfänger ferner den Anbindungs-Sendeempfänger aufweist. Die Vorrichtung für den Basisstations-Sendeempfänger umfasst zumindest ein Sendeempfängermodul, das ausgebildet ist, um mit zumindest einem mobilen Sendeempfänger des Mobilkommunikationssystems über eine Zugriffsverbindung zu kommunizieren. Die Vorrichtung für den Basisstations-Sendeempfänger umfasst ferner eine Schnittstelle, die ausgebildet ist, um mit dem Anbindungs-Sendeempfänger des Relay-Sendeempfängers zu kommunizieren. Die Vorrichtung für den Basisstations-Sendeempfänger umfasst darüber hinaus ein Kontrollmodul, das ausgebildet ist, um über die Schnittstelle Information bezüglich einer Kapazität einer Anbindungsverbindung zwischen dem Anbindungs-Sendeempfänger und einem weiteren Basisstations-Sendeempfänger des Mobilkommunikationssystems zu erhalten, und um über das zumindest eine Sendeempfängermodul eine Kapazität der Zugriffsverbindung an die Kapazität der Anbindungsverbindung anzupassen.

Ausführungsbeispiele können so erlauben, eine Kapazität einer Zugriffsverbindung an eine Kapazität einer Anbindungsverbindung anzupassen. Insofern können Schwankungen in der Kapazität, wie sie bezüglich einiger Ausführungsbeispiele eines mobilen Relay-Sendeempfängers auftreten, auf die Zugriffsverbindung abgebildet werden. Damit können in manchen Ausführungsbeispielen Qualitätseinbußen reduziert oder vermieden werden, beispielsweise wenn diese durch Paketverluste, Verzögerungen oder zu große Datenzwischenspeicher hervorgerufen werden. Ausführungsbeispiele können eine Vorausplanung eines Bandbreitenbudgets erlauben, die auf Kapazitätsbetrachtungen der Anbindungsverbindung basiert und auf deren Grundlage die Kapazität oder der Datendurchsatz der Zugriffsverbindung angepasst werden kann.

In weiteren Ausführungsbeispielen kann das Kontrollmodul der Vorrichtung für den Anbindungs-Sendeempfänger ausgebildet sein, um mittels der Information über die Kapazität einen Datendurchsatz über eine Zugriffsverbindung zwischen dem Basisstations-Sendeempfänger des Relay-Sendeempfängers und einem mobilen Sendeempfänger des Mobilkommunikationssystems an die Kapazität der Anbindungsverbindung anzupassen. Beispielsweise kann das Kontrollmodul der Vorrichtung für den Basisstations-Sendeempfänger ausgebildet sein, um Funkressourcen der Zugriffsverbindung zu verwalten und um eine Zuweisung der Funkressourcen der Zugriffsverbindung an den zumindest einen mobilen Sendeempfänger basierend auf der Information bezüglich der Kapazität durchzuführen. In anderen Worten kann ein Scheduler im Basisstations-Sendeempfänger, z.B. einer Femtozelle in einem Fahrzeug, entsprechend instruiert oder angepasst werden.

Das Kontrollmodul der Vorrichtung für den Anbindungs-Sendeempfänger kann in manchen Ausführungsbeispielen ausgebildet sein, um mittels der Information über die Kapazität dem Basisstations-Sendeempfänger des Relay-Sendeempfängers eine Instruktion über eine Anpassung eines Datendurchsatzes auf einer Zugriffsverbindung zwischen dem Basisstations-Sendeempfänger des Relay-Sendeempfängers und einem mobilen Sendeempfänger des Mobilkommunikationssystems bereitzustellen. Analog kann in umgekehrter Richtung das Kotrollmodul der Vorrichtung für den Basisstations-Sendeempfänger angepasst sein, um die Instruktion zu empfangen. Insofern kann in manchen Ausführungsbeispielen die Überwachung der bereitgestellten Datenraten auf der Zugriffsverbindung durch die Vorrichtung des Anbindungs-Sendeempfängers erfolgen, beispielsweise kann diese dann Instruktionen an den Basisstations-Sendeempfänger übermitteln. In anderen Ausführungsbeispielen kann diese Überwachung auch durch die Vorrichtung des Basisstations-Sendeempfängers erfolgen, und über die jeweiligen Schnittstellen werden Informationen bezüglich gemessener oder erwarteter Kapazität der Anbindungsverbindung übermittelt. Ausführungsbeispiele können so eine gewisse Flexibilität hinsichtlich verschiedener Implementierungen der Überwachung bieten.

In einigen Ausführungsbeispielen kann das Kontrollmodul für den Anbindungs-Sendeempfänger ausgebildet sein, um über das Sendeempfängermodul Messungen bezüglich einer Funkqualität der Anbindungsverbindung durchzuführen und um basierend auf den Messungen bezüglich der Funkqualität die Information über die Kapazität zu bestimmen. In manchen Ausführungsbeispielen können dabei Messungen verwendet werden, die ohnehin unter den Vorgaben eines verwendeten Mobilfunkstandards vorgegeben sind, allerdings wird dann diesbezügliche Information, und sei es in Form von daraus abgeleiteten Instruktionen, über die Schnittstelle bereitgestellt. Ergänzend oder alternativ kann das Kontrollmodul der Vorrichtung für den Anbindungs-Sendeempfänger auch ausgebildet sein, um die Information über die Kapazität basierend auf einer dem Anbindungs-Sendeempfänger von dem weiteren Basisstations-Sendeempfänger zugewiesenen Datenkapazität auf der Anbindungsverbindung zu bestimmen. In anderen Worten können Ausführungsbeispiele bei der Bestimmung der Information über die Kapazität der Anbindungsverbindung berücksichtigen, wieviel Kapazität, z. B. in Form von zugewiesenen oder zugeteilten Funkressourcen, auf der Anbindungsverbindung zur Verfügung steht und so auch Verkehrs- oder Interferenzbedingungen des versorgenden Mobilkommunikationssystem berücksichtigen.

Das Kontrollmodul der Vorrichtung für den Anbindungs-Sendeempfänger kann in weiteren Ausführungsbeispielen ausgebildet sein, um über die Schnittstelle mittels der Information über die Kapazität einen Datendurchsatz einer Zugriffsverbindung zwischen dem Basisstations-Sendeempfänger des Relay-Sendeempfängers und einem mobilen Sendeempfänger des Mobilkommunikationssystems einzustellen, der niedriger als ein Datendurchsatz der Anbindungsverbindung ist. Das Kontrollmodul der Vorrichtung für den Basisstations-Sendeempfänger kann ferner ausgebildet sein, um einen Datendurchsatz der Zugriffsverbindung einzustellen, der niedriger ist als ein Datendurchsatz der Anbindungsverbindung. Insofern kann zumindest in manchen Ausführungsbeispielen eine Kapazität der Anbindungsverbindung größer als eine Kapazität einer Zugriffsverbindung gehalten werden, was eine Übertragung von Zusatzinformation über die Anbindungsverbindung erlaubt. Solche Zusatzinformation kann zusätzliche Signalisierung oder Kontrolldaten umfassen, aber auch Nutzdaten von anderen Komponenten, die ebenfalls die Anbindungsverbindung zur Übertragung nutzen, wie beispielsweise Telemetriemodule, Fahrassistenzsysteme, Navigationskomponenten, etc.

Ausführungsbeispiele schaffen ferner einen Relay-Sendeempfänger mit einem Anbindungs-Sendeempfänger mit einer Vorrichtung gemäß der obigen Beschreibung und einem Basisstations-Sendeempfänger mit einer Vorrichtung gemäß der obigen Beschreibung. Ausführungsbeispiele stellen ferner ein Fahrzeug mit einem Relay-Sendeempfänger bereit. In manchen Ausführungsbeispielen umfasst das Fahrzeug ferner zumindest ein Datenmodul, wobei das Datenmodul ausgebildet ist, um Daten über die Anbindungsverbindung zu kommunizieren.

Ausführungsbeispiele schaffen ferner ein Verfahren für einen Anbindungs-Sendeempfänger eines Relay-Sendeempfängers in einem Mobilkommunikationssystem, wobei der Relay-Sendeempfänger ferner einen Basisstations-Sendeempfänger aufweist. Das Verfahren umfasst ferner ein Kommunizieren mit zumindest einem weiteren Basisstations-Sendeempfänger des Mobilkommunikations-systems über eine Anbindungsverbindung und ein Kommunizieren mit dem Basisstations-Sendeempfänger des Relay-Sendeempfängers. Das Verfahren umfasst ferner ein Bestimmen von Information bezüglich einer Kapazität der Anbindungsverbindung, und ein Kommunizieren der Information bezüglich der Kapazität an den Basisstations-Sendeempfänger des Relay-Sendeempfängers.

Ausführungsbeispiele stellen ferner ein Verfahren für einen Basisstations-Sendeempfänger eines Relay-Sendeempfängers in einem Mobilkommunikationssystem bereit, wobei der Relay-Sendeempfänger ferner einen Anbindungs-Sendeempfänger aufweist. Das Verfahren umfasst ein Kommunizieren mit zumindest einem mobilen Sendeempfänger des Mobilkommunikationssystems über eine Zugriffsverbindung und ein Kommunizieren mit dem Anbindungs-Sendeempfänger des Relay-Sendeempfängers. Das Verfahren umfasst ferner ein Erhalten von Information bezüglich einer Kapazität einer Anbindungsverbindung zwischen dem Anbindungs-Sendeempfänger und einem weiteren Basisstations-Sendeempfänger des Mobilkommunikationssystem. Das Verfahren umfasst darüber hinaus ein Anpassen einer Kapazität der Zugriffsverbindung an die Kapazität der Anbindungsverbindung.

Ausführungsbeispiele schaffen ferner ein Programm/Computerprogramm mit einem Programmcode zum Durchführen zumindest eines der oben beschriebenen Verfahren, wenn der Programmcode auf einem Computer, einem Prozessor, einem Controller oder einer programmierbaren Hardwarekomponente ausgeführt wird. Ausführungsbeispiele schaffen auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

### Figurenkurzbeschreibung

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
Fig. 1 ein Blockdiagramm eines Ausführungsbeispiels einer Vorrichtung für einen Anbindungs-Sendeempfänger und einer Vorrichtung für einen Basisstations-Sendeempfänger eines Relay-Sendeempfängers in einem Mobilkommunikationssystem;
Fig. 2 ein Blockdiagramm eines Ausführungsbeispiels eines mobilen Relay-Sendeempfängers in einem Fahrzeug;
Fig. 3 ein Blockschaltbild eines Ablaufdiagramms eines Ausführungsbeispiels eines Verfahrens für einen Anbindungs-Sendeempfänger eines Relay-Sendeempfängers; und
Fig. 4 ein Blockschaltbild eines Ablaufdiagramms eines Ausführungsbeispiels eines Verfahrens für einen Basisstations-Sendeempfänger eines Relay-Sendeempfängers.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden", "gekoppelt" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," " eine", "eines " und "der, die, das" auch die Plural-formen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

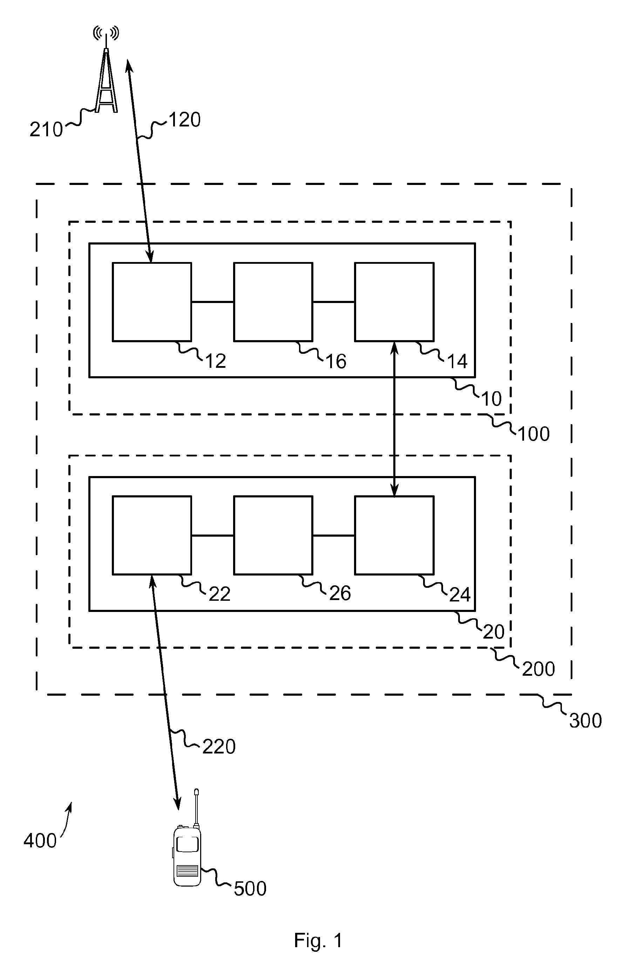

Fig. 1 zeigt ein Blockdiagramm eines Ausführungsbeispiels einer Vorrichtung 10 für einen Anbindungs-Sendeempfänger 100 und ein Blockdiagramm eines Ausführungsbeispiels einer Vorrichtung 20 für einen Basisstations-Sendeempfänger 200 eines Relay-Sendeempfängers 300 in einem Mobilkommunikationssystem 400. Ausführungsbeispiele schaffen demnach auch einen Anbindungs-Sendeempfänger 100 mit einer Vorrichtung 10, einen Basisstations-Sendeempfänger 200 mit einer Vorrichtung 20 sowie einen Relay-Sendeempfänger 300 mit einem Anbindungs-Sendeempfänger 100 und einem Basisstations-Sendeempfänger 200. Darüber hinaus zeigt die Fig.1 einen weiteren Basisstations-Sendeempfänger 210 und einen mobilen Sendeempfänger 500. Diese Komponenten bilden zusammen ein Ausführungsbeispiel eines Mobilkommunikationssystems 400.

Ausführungsbeispiele können daher von einem Sendeempfänger/Mobilfunkgerät 500 Gebrauch machen, das zur Kommunikation von Daten über ein Mobilfunksystem 400 mit einem Server oder Computer oder einem anderen Kommunikationspartner ausgebildet ist, der beispielsweise über Internet bzw. das World Wide Web (WWW) oder ein anderes Netz erreichbar ist. Das Mobilfunksystem/-kommunikationssystem 400 kann beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (Time Division Multiple Access (TDMA)), Frequenzbereichsvielfachzugriffsverfahren (Frequency Division Multiple Access (FDMA)), Kodebereichsvielfachzugriffsverfahren (Code Division Multiple Access (CDMA)), orthogonalen Frequenzbereichsvielfachzugriffsverfahren (Orthogonal Frequency Division Multiple Access (OFDMA)) oder einer anderen Technologie bzw. Vielfachzugriffverfahren basiert. Im Folgenden werden die Begriffe Mobilfunksystem, Mobilfunknetz, mobiles Kommunikationssystem und Mobilfunknetzwerk synonym benutzt.

Die Vorrichtung 10 für den Anbindungs-Sendeempfänger 100 des Relay-Sendeempfängers 300 in dem Mobilkommunikationssystem 400 umfasst zumindest ein Sendeempfängermodul 12, das ausgebildet ist, um mit zumindest einem weiteren Basisstations-Sendeempfänger 210 des Mobilkommunikationssystems 400 über eine Anbindungsverbindung 120 zu kommunizieren. In Ausführungsbeispielen kann das Sendeempfängermodul 12 typische Sender- bzw. Empfängerkomponenten enthalten. Darunter können beispielsweise ein oder mehrere Antennen, ein oder mehrere Filter, ein oder mehrere Mischer, ein oder mehrere Verstärker, ein oder mehrere Diplexer, ein oder mehrere Duplexer, usw. fallen. Das Sendeempfängermodul 12 kann in Ausführungsbeispielen verschiedene Funktechnologien, beispielsweise UMTS, LTE, eine der o.g. Technologien, ein kabelloses lokales Zugangsnetzwerk (WLAN, nach engl. Wireless Local Access Network) oder weitere Funktechnologien nutzen.

Wie die Fig. 1 zeigt umfasst die Vorrichtung 10 ferner eine Schnittstelle 14, die ausgebildet ist, um mit dem Basisstations-Sendeempfänger 200 des Relay-Sendeempfängers 300, bzw. einer dort vorgesehenen Schnittstelle 24, zu kommunizieren. Die Schnittstellen 14, 24 können dabei als beliebige schnurgebundene oder in manchen Ausführungsbeispielen sogar als weitere schnurlose Schnittstellen 14, 24 ausgebildet sein, die den Austausch von Daten erlauben. In manchen Ausführungsbeispielen sind der Anbindungs-Sendeempfänger 100 und der Basisstations-Sendeempfänger 200 in einem mobilen Relay-Sendeempfänger 300 implementiert, beispielsweise zur Anbindung einer im Inneren eines Fahrzeugs bereitgestellten Zelle an ein Mobilkommunikationssystem 400. Der Anbindungs-Sendeempfänger 100 kann dann über die Schnittstelle 14 mit dem Basisstations-Sendeempfänger 200 ge- oder verkoppelt sein, z.B. über eine entsprechende Verdrahtung.

Die Fig. 1 illustriert weiterhin, dass die Schnittstelle 14 und das Sendeempfängermodul 12 mit einem Kontrollmodul 16 ge- oder verkoppelt sind. Das Kontrollmodul 16 ist ausgebildet, um über das Sendeempfängermodul 12 Information bezüglich einer Kapazität der Anbindungsverbindung 120 zu bestimmen und um über die Schnittstelle 14 die Information bezüglich der Kapazität an den Basisstations-Sendeempfänger 200 des Relay-Sendeempfängers 300 zu kommunizieren. In Ausführungsbeispielen kann das Kontrollmodul 16, und auch das weiter unten eingeführte Kontrollmodul 26, einem beliebigen Controller oder Prozessor oder einer programmierbaren Hardwarekomponente entsprechen. Beispielsweise kann das Kontrollmodul 16 auch als Software realisiert sein, die für eine entsprechende Hardwarekomponente programmiert ist. Insofern kann das Kontrollmodul 16 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 16, bzw. des Kontrollmoduls 26, denkbar.

In Ausführungsbeispielen sind ferner verschiedene Möglichkeiten zur Bestimmung der Information bezüglich der Kapazität der Anbindungsverbindung denkbar. Z.B. kann das Kontrollmodul 16 über das Sendeempfängermodul 12 Messungen durchführen, wie Signalzu-Rauschleistungsverhältnisse (auch engl. Signal-to-Noise Ratio (SNR)), Signal-zu-Interferenzleistungsverhältnisse (auch engl. Signal-to-Interference- Ratio (SIR)), Signal-zu-Interferenz- und Rauschleistungsverhältnisse (auch engl. Signal-to-Interference-and-Noise Ratio (SINR)), Empfangsleistungen bestimmter Signale, Kanäle oder Codes (auch engl. Receive Signal Code Power (RSCP), Receive Signal Strength Indicator (RSSI)) etc. Diese aber auch andere Messungen können beispielsweise dazu herangezogen werden, eine Einschätzung oder eine Erwartung/Prognose für eine Übertragungskapazität der Anbindungsverbindung zu bestimmen. Darüber hinaus können zugeteilte Funkressourcen berücksichtigt werden. Ferner wären Qualitätskriterien denkbar, beispielsweise eine Mindestbandbreite (z.B. eine garantierte mittlere Datenrate oder ein Datendurchsatz), eine maximale Verzögerung (auch engl. Delay wie es beispielsweise bei Echtzeitdiensten vorkommt, im Sinne einer garantierten Zustellzeit), oder eine maximale Bitfehlerrate. Informationen über Qualitätskriterien werden oft unter dem Akronym QoS (von engl. Quality of Service) zusammengefasst.

Fig. 1 illustriert ferner ein Ausführungsbeispiel einer Vorrichtung 20 für einen Basisstations-Sendeempfänger 200 des Relay-Sendeempfängers 300 in dem Mobilkommunikationssystem 400. Die Vorrichtung 20 umfasst zumindest ein Sendeempfängermodul 22, das ausgebildet ist, um mit zumindest einem mobilen Sendeempfänger 500 des Mobilkommunikationssystems 400 über eine Zugriffsverbindung 220 zu kommunizieren. Das Sendeempfängermodul 22 kann dabei gemäß dem oben beschriebenen Sendeempfängermodul 12 implementiert sein, wobei in manchen Ausführungsbeispielen eine Anpassung an den entsprechenden Einsatzbereich (wie z.B. Anpassungen der Verstärker an den Abdeckungsbereich) erfolgen kann.

Die Vorrichtung 20 umfasst eine Schnittstelle 24, die ausgebildet ist, um mit dem Anbindungs-Sendeempfänger 100, bzw. dessen Schnittstelle 14, des Relay-Sendeempfängers 300 zu kommunizieren. Die Schnittstelle 24 kann dabei an die oben beschriebene Schnittstelle 14 angepasst sein, so dass eine entsprechende Kommunikation möglich ist. Die Vorrichtung 20 umfasst ferner ein Kontrollmodul 26, welches mit dem Sendeempfängermodul 22 und der Schnittstelle 24 ge- oder verkoppelt ist. Das Kontrollmodul 26 ist ausgebildet, um über die Schnittstelle 24 Information bezüglich einer Kapazität einer Anbindungsverbindung 120 zwischen dem Anbindungs-Sendeempfänger 100 und einem weiteren Basisstations-Sendeempfänger 210 des Mobilkommunikationssystem 400 zu erhalten, und um über das zumindest eine Sendeempfängermodul 22 eine Kapazität der Zugriffsverbindung 220 an die Kapazität der Anbindungsverbindung 120 anzupassen. Das Kontrollmodul 26 kann analog zum oben beschriebenen Kontrollmodul 16 implementiert sein, beispielsweise als Prozessor, Software, usw.

Generell kann in der vorliegenden Beschreibung ein Basisstations-Sendeempfänger oder eine Basisstation (diese Begriffe können äquivalent verwendet werden) ausgebildet sein, um mit einem oder mehreren aktiven Mobilfunkgeräten zu kommunizieren, und um in oder benachbart zu einem Versorgungs- oder Abdeckungsbereich eines anderen Basisstations-Sendeempfängers oder einer Basisstation zu kommunizieren, z.B. als Makrozell-Basisstation oder als Kleinzell-Basisstation. Somit können Ausführungsformen ein Mobilkommunikationssystem 400 mit einem oder mehreren Mobilfunkendgeräten 500 und einer oder mehreren Basisstationen 200, 210 umfassen, wobei die Basisstations-Sendempfänger 200, 210 Makrozellen oder kleine Zellen bereitstellen können, z. B. Pico-, Metro- oder Femto-Zellen. Ein mobiler Sendeempfänger 500 oder Mobilfunkendgerät kann einem Smartphone (intelligentes Telefon), einem Handy, einem Benutzergerät, einem Funkgerät, einer Mobilen, einer Mobilstation, einem Laptop, einem Notebook, einem Personal Computer (PC), einem Personal Digital Assistant (PDA), einem Universal Serial Bus (USB)-Stick oder-Adapter, einem Auto, etc., entsprechen. Ein mobiler Sendeempfänger 500 kann auch als engl. "User Equipment (UE)" oder Mobile im Einklang mit der 3GPP-Terminologie bezeichnet werden.

Ein Basisstations-Sendeempfänger 200, 210 oder eine Basisstation kann zumindest aus der Sicht eines Mobilfunkendgerätes 500 in einem feststehenden oder zumindest festverbundenen Teil des Netzwerks oder Systems befinden. Ein Basisstations-Sendeempfänger 200, 210 oder eine Basisstation kann auch einem Remote Radio Head, einer Relay-Station, einem Übertragungspunkt, einem Zugriffspunkt (auch engl. "Access Point"), einem Funkgerät, einer Makrozelle, einer kleinen Zelle, einer Mikrozelle, einer Femtozelle, einer Metrozelle usw. entsprechen. Eine Basisstation 200, 210 oder ein Basisstations-Sendeempfänger wird somit als logisches Konzept eines Knotens/einer Einheit zur Bereitstellung eines Funkträgers oder von Funkverbindungen über die Luftschnittstelle verstanden, über den oder die einem Endgerät/mobile Sendeempfänger Zugang zu einem Mobilfunknetz verschafft wird.

Eine Basisstation oder ein Basisstations-Sendeempfänger 200, 210 kann eine drahtlose Schnittstelle für Mobilfunkendgeräte 500 zu einem verdrahteten Netzwerk 400 darstellen. Die verwendeten Funksignale können durch 3GPP standardisierte Funksignale sein oder allgemein Funksignale in Übereinstimmung mit einer oder mehreren der oben genannten Systeme. So kann eine Basisstation 200, 210 oder ein Basisstations-Sendeempfänger einer NodeB, einer eNodeB, einer Base Transceiver Station (BTS), einem Zugangspunkt, einem Remote Radio Head, einem Übertragungspunkt, einer Relay-Station, etc. entsprechen, die in weitere Funktionseinheiten unterteilt sein kann.

Ein Mobilfunkendgerät oder mobiler Sendeempfänger 500 kann einer Basisstation 200, 210 oder Zelle zugeordnet werden oder bei dieser registriert sein. Der Begriff Zelle bezieht sich auf einen Abdeckungsbereich der Funkdienste, die durch eine Basisstation bereitgestellt werden, z.B. von einer NodeB (NB), einer eNodeB (eNB), einem Remote Radio Head, einem Übertragungspunkt, eine Relay-Station, etc. Eine Basisstation 200, 210 kann eine oder mehrere Zellen auf einer oder mehreren Trägerfrequenzen bereitstellen. In manchen Ausführungsformen kann eine Zelle auch einem Sektor entsprechen. Z.B. können Sektoren mit Sektorantennen, die zur Abdeckung eines Winkelabschnitts um einen Antennenstandort herum ausgebildet sind, gebildet werden. In einigen Ausführungsformen kann eine Basisstation 200, 210 beispielsweise zum Betrieb von drei oder sechs Zellen oder Sektoren ausgelegt sein (z.B. 120° im Fall von drei Zellen und 60° im Fall von sechs Zellen). Eine Basisstation kann mehrere Sektorantennen umfassen. Im Folgenden können die Begriffe Zelle und Basisstation auch synonym verwendet werden. Darüber hinaus werden feste und mobile Basisstationen 200, 210 unterschieden, wobei mobile Basisstationen 200 auch als oder in mobile(n) Relay-Stationen 300 fungieren können.

Mit anderen Worten kann in den Ausführungsformen das Mobilkommunikationssystem 400 auch ein heterogenes Zellnetzwerk (HetNet) umfassen, das unterschiedliche Zelltypen aufweist, z.B. Zellen mit geschlossenen Nutzergruppen (auch engl. "Close Subscriber Group CSG") und offenen Zellen sowie Zellen unterschiedlicher Größe, wie z.B. Makrozellen und kleine Zellen, wobei der Abdeckungsbereich einer kleinen Zelle kleiner ist als der Abdeckungsbereich einer Makrozelle. Eine kleine Zelle kann einer Metrozelle, einer Mikrozelle, einer Picozelle, einer Femtozelle usw. entsprechen. Die Abdeckungsbereiche der einzelnen Zellen werden durch die Basisstationen 200, 210 für ihre Versorgungsgebiete bereitgestellt und hängen von den Sendeleistungen der Basisstationen und den Interferenzbedingungen in dem jeweiligen Bereich ab. In manchen Ausführungsformen kann der Abdeckungsbereich einer kleinen Zelle zumindest teilweise von einem Versorgungsbereich einer anderen Zelle umgeben sein oder teilweise mit dem Versorgungsbereich einer z.B. Makrozelle übereinstimmen oder überlappen. Kleine Zellen können eingesetzt werden, um die Kapazität des Netzwerks zu erweitern. Eine Metrozelle kann daher verwendet werden, um eine kleinere Fläche als eine Makrozelle abzudecken, z.B. werden Metrozellen verwendet, um eine Straße oder einen Abschnitt in einem Ballungsgebiet abzudecken. Für eine Makrozelle kann der Abdeckungsbereich einen Durchmesser in der Größenordnung von einem Kilometer oder mehr haben, für eine Mikrozelle kann der Abdeckungsbereich einen Durchmesser von weniger als einem Kilometer haben und eine Picozelle kann einen Abdeckungsbereich mit einen Durchmesser von weniger als 100m haben. Eine Femtozelle kann den kleinsten Abdeckungsbereich aufweisen und sie kann verwendet werden, um beispielsweise einen Haushalts-, einen KFZ- oder einen Gate-Bereich auf dem Flughafen abzudecken, d.h. ihr Sendegebiet kann einen Durchmesser von unter 50m zu haben.

Basisstations-Sendeempfänger 200, die rückseitig wiederum über eine Funkverbindung mit einer Basisstation 210 des Mobilkommunikationssystems 400 kommunizieren, werden auch Relay-Sendeempfänger 300 genannt. In Ausführungsbeispielen stellen sie für mobile Sendeempfänger 500 eine Zelle, beispielsweise eine kleine Zelle, bereit, nutzen aber selbst eine Funkverbindung, um mit dem Mobilkommunikationssystem 400 zu kommunizieren und die Anfragen der mobilen Sendeempfänger 500 weiterzugeben. Dabei können Relay-Sendeempfänger 300 beispielsweise durch größere Antennen, eine bessere Stromversorgung und einen günstigeren Standort (z.B. auf einem Berg oder mit Antennen außerhalb eines Fahrzeugs) eine bessere Verbindung zu einem Mobilkommunikationssystem 400 herstellen und die Anbindung der mobilen Sendeempfänger 500 an das Mobilkommunikationssystem 400 verbessern. Eine Sonderform eines Relay-Sendeempfängers 300 stellt der mobile Relay-Sendeempfänger 300, der, im Gegensatz zum Relay-Sendeempfänger, keinen festen Standort hat, sondern beweglich ist, dar. Mobile Relay-Sendeempfänger 300 können in Ausführungsbeispielen beispielsweise in Fahrzeugen, etwa Kraftfahrzeugen, Zügen oder Schiffen genutzt werden, und können dort den Insassen des Fahrzeugs eine Zelle und damit entsprechende Schnurlosdienste zur Verfügung stellen.

Im Rahmen dieser Beschreibung wird eine Reihe von Fachausdrücken benutzt, die im Folgenden näher erläutert werden sollen. Eine mobile Femtozelle entspricht einem mobilen Basisstations-Sendeempfänger 200 der eine vergleichsweise kleine Radiozelle zur Bereitstellung von Schnurlosdiensten erzeugt und mittels derer zumindest ein Teil eines Innenraums eines Fahrzeug ausgeleuchtet/abdeckt werden kann. In manchen Ausführungsbeispielen sind auch größere Abdeckungsberieche denkbar, beispielsweise innerhalb von größeren Fahrzeugen und auch eine Aufteilung eines Abdeckungsbereiches auf mehrere mobile Basisstations-Sendeempfänger 200.

Der externe oder weitere Basisstations-Sendeempfänger 210 des Mobilkommunikations-systems 400 entspricht einem Anbindungsknoten an die feste Infrastruktur des Mobilkommunikationssystems 400, beispielsweise ein Basisstations-Sendeempfänger 210 außerhalb eines Fahrzeugs mit einem mobilen Relay-Sendeempfänger 300, der wiederum die mobile Femtozelle 200 umfasst. Der Anbindungs-Sendeempfänger 100 (auch engl. "backhaul providing device") stellt die Verbindung 120 zwischen dem externen Basisstations-Sendeempfänger 210 und der mobilen Femtozelle 200 her. In anderen Worten kann der Anbindungs-Sendeempfänger 100 die rückwärtige Anbindung eines mobilen Basisstations-Sendeempfängers 200 an das Mobilkommunikationssystem 400 über die schnurlose Anbindungsverbindung 120 bereitstellen, z.B. für eine Femtozelle in einem Fahrzeug.

Ferner sei, beispielsweise, unter einer mobilen Femtozelle 200 eine Kleinzelle verstanden, die innerhalb eines Fahrzeugs eingesetzt wird und die über die besagte Anbindungsverbindung 120 an die Netzwerk-Infrastruktur 400 angebunden ist, beispielsweise unter Nutzung einer mobilen Internet-Protokoll-Verbindung (auch engl. "mobile IP-Link"), die beispielsweise über ein zellulares Netzwerk übertragen werden kann, z.B. über ein 3GPP System wie eine UMTS-Verbindung oder eine LTE-Verbindung. Die Kapazität dieser schnurlosen Anbindungsverbindung 120 kann, im Unterschied zu traditionellen Anbindungsverbindungen, schnell und stark variieren, beispielsweise hinsichtlich eines Datendurchsatzes und hinsichtlich etwaiger oder potentieller Latenzzeiten. In konventionellen zellularen Netzwerkarchitekturen verfügt die Anbindungsverbindung 120 in Richtung der Infrastruktur des Netzwerks über eine höhere Kapazität und höhere Datendurchsatzraten als die schnurlose Zugriffsverbindung 220 über die Luftschnittstelle der Zelle 200. Darüber hinaus ist die Kapazität der Anbindungsverbindung 120 in konventionellen Netzwerken relativ stabil, d.h. im Vergleich zu Funkverbindungen eher geringen Schwankungen unterworfen, sodass es eher selten zu Engpässen, Überlastungen, etc. kommt. Im Falle von mobilen Femtozellen, treffen diese Gegebenheiten nicht mehr zu. Typischerweise hat ein mobiler Relay-Sendeempfänger 300 eine Radiokapazität für die Zugriffsverbindung 220, die größer als die Radiokapazität der Anbindungsverbindung 120 ist, und die zudem starken zeitlichen Schwankungen im Bereich von etwa 10ms Kohärenzzeit unterworfen ist.

In 3GPP Netzwerkarchitekturen spricht man auch von einer IuH-Schnittstelle bzw. auch engl. einem "IuH-Interface" bzgl. der Anbindungsverbindung 120 eines mobilen Relay-Sendeempfängers 300, beispielsweise im Falle der Anbindung einer "Home eNB", vgl. auch 3GPP TS 25.469 V12.2.0, 3rd Generation Partnership Project; Technical Specification Group Radio Access Network; UTRAN Iuh interface Home NodeB (HNB) Application Part (HNBAP) signaling (Release 12).

Für durch die IuH-Schnittstelle bestimmte Netzwerk-Architekturen, beispielsweise in W-CDMA (Wideband CDMA, Breitband CDMA) und in LTE-Architekturen sind keine Datenfluss Kontrollmechanismen für die IuH Schnittstelle und die S1-Schnittstelle der Benutzerebene (auch engl. "user plane") vorgesehen. Daten, die zwischen einem Endgerät und einem entfernten Server im Internet ausgetauscht werden, unterliegen dann den Kontrollmechanismen der übergeordneten Protokolle, wie Transportprotokolle, z.B. Transmission Control Protocol (TCP)/ Internet Protocol (IP) und Universal Datagram Protocol (UDP), sodass diese übergeordnete Flusskontrolle benutzt werden kann. Zusätzlich können auf Anwendungsebene weitere Kontrollmechanismen implementiert werden.

Die Kontrollmechanismen nutzen typischerweise Zählmechanismen hinsichtlich verloren gegangener oder verzögerter Pakete, oder basieren auf der Beobachtung von aufgebauten Latenzzeiten in dem zu übertragenden Datenstrom. In traditionellen Netzwerktopologien steigt die Datenkapazität der Schnittstellen auf dem Weg zwischen einem mobilen Endgerät und einem Server innerhalb der Infrastruktur des Netzwerkes. Typischerweise hat die Luftschnittstelle die geringste Kapazität oder Bandbreite. Im Falle von mobilen Relay-Sendeempfängern 300 ist dies nicht mehr der Fall, da hier die Funkbedingungen innerhalb eines Fahrzeugs typischerweise erheblich besser sind als die Funkbedingungen die ein Anbindungs-Sendeempfängers 200 bezüglich der Netzwerkinfrastruktur oder des externen Basisstations-Sendeempfänger 210 über die Anbindungsverbindung 120 erfährt. Im Falle einer mobilen LTE Femtozelle 200 hat die Luftschnittstelle (auch engl. "Uu interface") über die Zugriffsverbindung 220 zu den mobilen Endgeräten 500 hin typischerweise eine höhere Datendurchsatzkapazität als die Luftschnittstelle (auch engl. "S1-U interface") über die Anbindungsverbindung 120 zu einem externen Basisstations-Sendeempfänger 210 und der Netzwerkinfrastruktur hin. Im Falle einer W-CDMA mobilem Femtozelle 200 ist die Luftschnittstelle (Uu interface) über die Zugriffsverbindung 220 zu den mobilen Endgeräten hin 500 typischerweise ebenfalls von größerer Kapazität als die Luftschnittstelle (IuH-Interface) über die Anbindungsverbindung 120 zur Netzwerkinfrastruktur 210 hin.

Ausführungsbeispiele schaffen daher ein Konzept zur Messung, Bestimmung oder Schätzung von Information bezüglich einer Kapazität der Anbindungsverbindung 120, beispielsweise durch Messung diverser Funkparameter und basierend auf den dieser Verbindung zugewiesenen Funkressourcen seitens eines externen Basisstations-Sendeempfängers 210 oder der Netzwerkinfrastruktur. In anderen Worten ist in einem Ausführungsbeispiel das Kontrollmodul 16 der Vorrichtung 10 des Anbindungs-Sendeempfänger 100 ausgebildet, um über das Sendeempfängermodul 12 Messungen bezüglich einer Funkqualität der Anbindungsverbindung 120 durchzuführen und um basierend auf den Messungen bezüglich der Funkqualität die Information über die Kapazität zu bestimmen. Ergänzend oder alternativ kann das Kontrollmodul 16 der Vorrichtung 10 des Anbindungs-Sendeempfänger 100 auch ausgebildet sein, um über das Sendeempfängermodul 12 die Information über die Kapazität basierend auf einer dem Anbindungs-Sendeempfänger 100 von dem weiteren Basisstations-Sendeempfänger 210 zugewiesenen Datenkapazität auf der Anbindungsverbindung 120 zu bestimmen. Die zugewiesene Datenkapazität kann dabei mittels beliebiger Funkressourcen erfolgen, z.B. Frequenzressourcen, Zeitressourcen, räumliche Ressourcen, Kombinationen dieser Ressourcen, Ressourcengruppen, etc.

In Ausführungsbeispielen können die Messungen entsprechend häufig durchgeführt werden und dann zur Steuerung oder Regelung der Datendurchsätze über die Zugriffsverbindung 220 des mobilen Basisstations-Sendeempfängers 200 verwendet werden. Ausführungsbeispiele können so unter Umständen Datenpaketverluste oder den Aufbau zusätzlicher Latenzzeiten verringern oder sogar vermeiden. Datenverluste können sich negativ auf Gesamtdatendurchsätze auswirken und erhöhte Latenzzeiten können insbesondere zeitkritische Dienste (z.B. Sprache und Video) negativ in ihrer Qualität beeinflussen. Manche Ausführungsbeispiele vermeiden oder reduzieren diese negativen Effekte dadurch, dass diese Effekte durch Anpassungen im Vorfeld (proaktiv) vermieden werden und diese nicht erst nach deren Auftreten betrachtet werden (reaktiv). Zusammenfassend können zumindest manche Ausführungsbeispiele negative Effekte, die durch schwankende Kapazität der funkbasierten Anbindungsverbindung 120 hervorgerufen werden, vermeiden, anstatt diese im Nachhinein zu korrigieren. Ausführungsbeispiele schaffen daher eine Schnittstelle 14, 24 zwischen einem Anbindungs-Sendeempfänger 100 und einem mobilen Basisstations-Sendeempfänger 200 eines mobilen Relay-Sendeempfängers 300, die es erlaubt Information hinsichtlich der Kapazität der Anbindungsverbindung 120 zu kommunizieren und eine Kapazität der Zugriffsverbindung 220 entsprechend anzupassen.

In einem weiteren Ausführungsbeispiel ist das Kontrollmodul 16 der Vorrichtung 10 für den Anbindungs-Sendeempfänger 100 ausgebildet, um mittels der Information über die Kapazität einen Datendurchsatz über die Zugriffsverbindung 220 zwischen dem Basisstations-Sendeempfänger 200 des Relay-Sendeempfängers 300 und einem mobilen Sendeempfänger 500 des Mobilkommunikationssystems 400 an die Kapazität der Anbindungsverbindung 120 anzupassen. Analog dazu ist aus der Sicht der Vorrichtung 20 für den Basisstations-Sendeempfänger 200 das Kontrollmodul 26 ausgebildet, um Funkressourcen der Zugriffsverbindung 220 zu verwalten und um eine Zuweisung der Funkressourcen der Zugriffsverbindung 220 an den zumindest einen mobilen Sendeempfänger 500 basierend auf der Information bezüglich der Kapazität durchzuführen. Die Funkressourcenverwaltung kann durch sogenannte Ressourcenzuweisung auf der Protokollschicht 2 geschehen, was auch engl. Scheduling bezeichnet wird.

Basierend auf dieser Information kann dann beispielsweise die mobile Femtozelle 200 angewiesen werden, die Kapazität der Zugriffsverbindung 220 entsprechend anzupassen oder einzuschränken, z.B. durch entsprechende Anweisungen an eine Funkressourcen-Zuweisungsinstanz (auch engl. "scheduler") auf der zweiten Protokollschicht (auch engl. "Medium Access Control (MAC)").

In einem weiteren Ausführungsbeispiel ist das Kontrollmodul 16 der Vorrichtung 100 ausgebildet, um mittels der Information über die Kapazität dem Basisstations-Sendeempfänger 200 des Relay-Sendeempfängers 300 eine Instruktion über eine Anpassung eines Datendurchsatzes auf einer Zugriffsverbindung 220 zwischen dem Basisstations-Sendeempfänger 200 des Relay-Sendeempfängers 300 und einem mobilen Sendeempfänger 500 des Mobilkommunikationssystems 400 bereitzustellen. Insofern kann die Kontrolle in diesem Ausführungsbeispiel durch das Kontrollmodul 16 der Vorrichtung 10 des Anbindungs-Sendeempfängers 100 erfolgen, wohingegen in den oben erläuterten Ausführungsbeispielen die Kontrolle eher auf der Seite der Vorrichtung 20 und des Kontrollmoduls 26 lag, da hier ggf. nur Information hinsichtlich der Kapazität bereitgestellt wurde, auf die dann durch den Basisstations-Sendeempfänger 200 reagiert wurde.

In manchen Ausführungsbeispielen kann eine Kapazität, z.B. bzgl. eines Datendurchsatzes, der Zugriffsverbindung 200 auch unter eine Kapazität der Anbindungsverbindung 120 gesenkt werden, z.B. um Kapazitäten für die Übertragung von Daten anderen Komponenten, die in einem Fahrzeug vorhanden sind, frei zu halten. In einem Ausführungsbeispiel ist das Kontrollmodul 16 der Vorrichtung 10 für den Anbindungs-Sendeempfänger 100 ausgebildet, um über die Schnittstelle 14 mittels der Information über die Kapazität einen Datendurchsatz der Zugriffsverbindung 220 zwischen dem Basisstations-Sendeempfänger 200 des Relay-Sendeempfängers 300 und dem mobilen Sendeempfänger 500 des Mobilkommunikationssystems 400 einzustellen, der niedriger als ein Datendurchsatz der Anbindungsverbindung 120 ist. Auf der Seite der Vorrichtung 20 für den Basisstations-Sendeempfänger 200 ist das Kontrollmodul 26 ausgebildet, um einen Datendurchsatz der Zugriffsverbindung 220 einzustellen, der niedriger ist, als ein Datendurchsatz der Anbindungsverbindung 120.

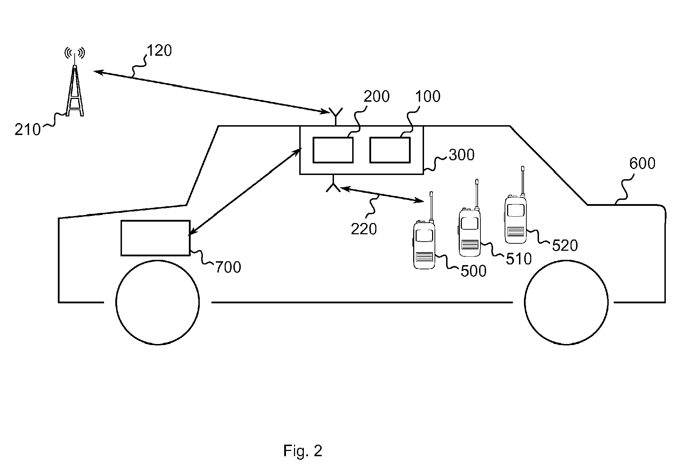

Fig. 2 zeigt ein Blockdiagramm eines Ausführungsbeispiels eines mobilen Relay-Sendeempfängers 300 in einem Fahrzeug 600, wie z.B. ein Auto. Der Relay-Sendeempfänger 300 umfasst einen Anbindungs-Sendeempfänger 100 mit einer Vorrichtung 10 gemäß obiger Beschreibung der eine Anbindungsverbindung 120 zu einem weiteren Basisstations-Sendeempfänger 210 des Mobilkommunikationssystem herstellt. Der mobile Relay-Sendeempfänger 300 umfasst ferner einen Basisstations-Sendeempfänger 200 mit einer Vorrichtung 20 gemäß obiger Beschreibung der eine Zugriffsverbindung 220 mit mehreren mobilen Sendeempfängern 500, 510, 520 im Innern des Fahrzeugs 600 herstellt. Insofern illustriert die Fig. 2 auch ein Ausführungsbeispiel eines Fahrzeugs 600 mit einem Relay-Sendeempfänger 300 gemäß obiger Beschreibung. In einem weiteren Ausführungsbeispiel, das ebenfalls in der Fig. 2 dargestellt ist, umfasst das Fahrzeug 600 zumindest ein Datenmodul 700. Das Datenmodul 700 ist ausgebildet, um Daten über die Anbindungsverbindung 120, bzw. über den Anbindungs-Sendeempfänger 100 zu kommunizieren. Beispielsweise kommen hier weitere mobile Basisstations-Sendeempfänger, Telemetriemodule, Navigationssysteme, Unterhaltungssysteme, Fahr- oder Fahrzeugüberwachungssystem usw. als Datenmodul 700 in Frage.

Durch die Anpassung der Kapazität der Zugriffsverbindung 220 an die Kapazität der Anbindungsverbindung 120 kann in einigen Ausführungsbeispielen eine Wahrscheinlichkeit dafür gesenkt werden, dass plötzliche Veränderungen in der Kapazität der Anbindungsverbindung 120 den Betrieb der mobilen Femtozelle negativ beeinflussen. Darüber hinaus können manche Ausführungsbeispiele berücksichtigen, dass das Datenaufkommen auf der Anbindungsverbindung 120 generell über dem Datenaufkommen der Zugriffsverbindung 220 liegt, da hier zusätzliche Protokolldaten übertragen werden und damit der Nutzdatendurchsatz der Anbindungsverbindung 120 unter dem der Zugriffsverbindung 220 liegen wird. Weitere Ausführungsbeispiele können berücksichtigen, dass die Anbindungsverbindung 120 von mehreren mobilen Basisstations-Sendeempfängern benutzt wird, beispielsweise in einem größeren Fahrzeug wie einem Bus, einem Zug, eine Fähre, eine Flugzeug usw., und sich somit die Kapazität der Anbindungsverbindung 120 auf mehrere mobile Basisstations-Sendeempfänger aufteilt.

Ausführungsbeispiele können einen Verlust von Datenpaketen oder den Aufbau von Verzögerungs- oder Latenzzeiten in einem mobilen Basisstations-Sendeempfänger 200 reduzieren oder sogar vermeiden und die Leistungsfähigkeit eines mobilen Basisstations-Sendeempfängers 200 verbessern. Ausführungsbeispiele können daher Bandbreitenbudgets vorsehen, die für eine Anbindungsverbindung 120 bestimmte Bandbreiten für andere Diensten vorsehen und diesen dann entsprechend zugewiesen werden und so eine gemeinsame Anbindungsverbindung 120 effizienter genutzt werden kann.

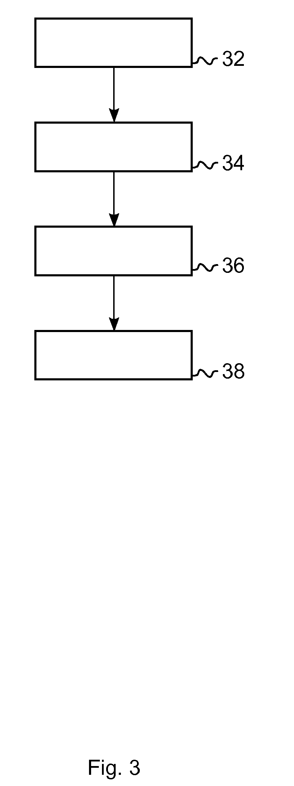

Fig. 3 zeigt ein Blockschaltbild eines Ablaufdiagramms eines Ausführungsbeispiels eines Verfahrens für einen Anbindungs-Sendeempfänger 100 eines Relay-Sendeempfängers 300. Das Verfahren für den Anbindungs-Sendeempfänger 100 des Relay-Sendeempfängers 300 in dem Mobilkommunikationssystem 400, wobei der Relay-Sendeempfänger 300 ferner den Basisstations-Sendeempfänger 200 aufweist, umfasst ein Kommunizieren 32 mit zumindest dem weiteren Basisstations-Sendeempfänger 210 des Mobilkommunikations-systems 400 über die Anbindungsverbindung 120. Das Verfahren umfasst ferner ein Kommunizieren 34 mit dem Basisstations-Sendeempfänger 200 des Relay-Sendeempfängers 300, und ein Bestimmen 36 von Information bezüglich einer Kapazität der Anbindungsverbindung 120. Das Verfahren umfasst darüber hinaus ein Kommunizieren 38 der Information bezüglich der Kapazität an den Basisstations-Sendeempfänger 200 des Relay-Sendeempfängers 300.

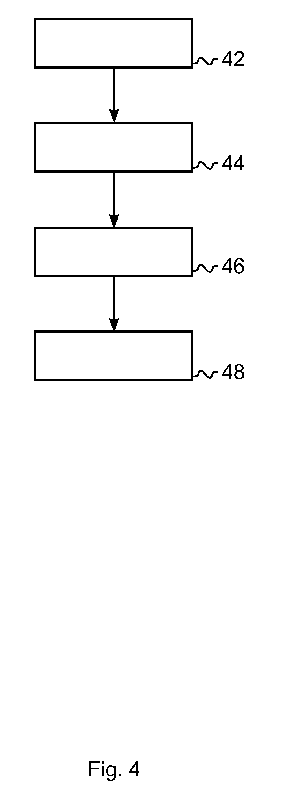

Fig. 4 zeigt ein Blockschaltbild eines Ablaufdiagramms eines Ausführungsbeispiels eines Verfahrens für einen Basisstations-Sendeempfänger eines Relay-Sendeempfängers. Das Verfahren für den Basisstations-Sendeempfänger 200 des Relay-Sendeempfängers 300 in dem Mobilkommunikationssystem 400 umfasst ein Kommunizieren 42 mit zumindest einem mobilen Sendeempfänger 500 des Mobilkommunikationssystems 400 über die Zugriffsverbindung 220 und ein Kommunizieren 44 mit dem Anbindungs-Sendeempfänger 100 des Relay-Sendeempfängers 300. Das Verfahren umfasst ferner ein Erhalten 46 von Information bezüglich einer Kapazität einer Anbindungsverbindung 120 zwischen dem Anbindungs-Sendeempfänger 100 und einem weiteren Basisstations-Sendeempfänger 210 des Mobilkommunikationssystems 400. Das Verfahren umfasst ferner ein Anpassen 48 einer Kapazität der Zugriffsverbindung 220 an die Kapazität der Anbindungsverbindung 120.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiel ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammen-wirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikro-prozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicher-stellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Eine Vorrichtung (10) für einen Anbindungs-Sendeempfänger (100) eines Relay-Sendeempfängers (300) in einem Mobilkommunikationssystem (400), wobei der Relay-Sendeempfänger (300) ferner einen Basisstations-Sendeempfänger (200) aufweist, umfassend
zumindest ein Sendeempfängermodul (12), das ausgebildet ist, um mit zumindest einem weiteren Basisstations-Sendeempfänger (210) des Mobilkommunikations-systems (400) über eine Anbindungsverbindung (120) zu kommunizieren;
eine Schnittstelle (14), die ausgebildet ist, um mit dem Basisstations-Sendeempfänger (200) des Relay-Sendeempfängers (300) zu kommunizieren; und
ein Kontrollmodul (16), das ausgebildet ist, um über das Sendeempfängermodul (12) Information bezüglich einer Kapazität der Anbindungsverbindung (120) zu bestimmen und um über die Schnittstelle (14) die Information bezüglich der Kapazität an den Basisstations-Sendeempfänger (200) des Relay-Sendeempfängers (300) zu kommunizieren, wobei das Kontrollmodul (16) ausgebildet ist, um über das Sendeempfängermodul (12) Messungen bezüglich einer Funkqualität der Anbindungsverbindung (120) durchzuführen und um basierend auf den Messungen bezüglich der Funkqualität die Information über die Kapazität zu bestimmen, und/oder um die Information über die Kapazität basierend auf einer dem Anbindungs-Sendeempfänger (100) von dem weiteren Basisstations-Sendeempfänger (210) zugewiesenen Datenkapazität auf der Anbindungsverbindung (120) zu bestimmen.

2. Vorrichtung (10) gemäß Anspruch 1, wobei das Kontrollmodul (16) ausgebildet ist, um mittels der Information über die Kapazität einen Datendurchsatz über eine Zugriffsverbindung (220) zwischen dem Basisstations-Sendeempfänger (200) des Relay-Sendeempfängers (300) und einem mobilen Sendeempfänger (500) des Mobilkommunikationssystems (400) an die Kapazität der Anbindungsverbindung (120) anzupassen.

3. Vorrichtung (10) gemäß Anspruch 1, wobei das Kontrollmodul (16) ausgebildet ist, um mittels der Information über die Kapazität dem Basisstations-Sendeempfänger (200) des Relay-Sendeempfänger (300) eine Instruktion über eine Anpassung eines Datendurchsatzes auf einer Zugriffsverbindung (220) zwischen dem Basisstations-Sendeempfänger (200) des Relay-Sendeempfängers (300) und einem mobilen Sendeempfänger (500) des Mobilkommunikationssystems (400) bereitzustellen.

4. Vorrichtung (10) gemäß einem der vorangehenden Ansprüche, wobei das Kontrollmodul (16) ausgebildet ist, um über die Schnittstelle (14) mittels der Information über die Kapazität einen Datendurchsatz einer Zugriffsverbindung (220) zwischen dem Basisstations-Sendeempfänger (200) des Relay-Sendeempfängers (300) und einem mobilen Sendeempfänger (500) des Mobilkommunikationssystems (400) einzustellen, der niedriger als ein Datendurchsatz der Anbindungsverbindung (120) ist.

5. Eine Vorrichtung (20) für einen Basisstations-Sendeempfänger (200) eines Relay-Sendeempfängers (300) in einem Mobilkommunikationssystem (400), wobei der Relay-Sendeempfänger (300) ferner einen Anbindungs-Sendeempfänger (100) aufweist, umfassend
zumindest ein Sendeempfängermodul (22), das ausgebildet ist, um mit zumindest einem mobilen Sendeempfänger (500) des Mobilkommunikationssystems (400) über eine Zugriffsverbindung (220) zu kommunizieren;
eine Schnittstelle (24), die ausgebildet ist, um mit dem Anbindungs-Sendeempfänger (100) des Relay-Sendeempfängers (300) zu kommunizieren; und
ein Kontrollmodul (26), das ausgebildet ist, um über die Schnittstelle (24) Information bezüglich einer Kapazität einer Anbindungsverbindung (120) zwischen dem Anbindungs-Sendeempfänger (100) und einem weiteren Basisstations-Sendeempfänger (210) des Mobilkommunikationssystem (400) zu erhalten, wobei die Information bezüglich der Kapazität auf Messungen bezüglich einer Funkqualität der Anbindungsverbindung (120) und/oder auf einer dem Anbindungs-Sendeempfänger (100) von dem weiteren Basisstations-Sendeempfänger (210) zugewiesenen Datenkapazität auf der Anbindungsverbindung (120) basiert, und um über das zumindest eine Sendeempfängermodul (22) eine Kapazität der Zugriffsverbindung (220) an die Kapazität der Anbindungsverbindung (120) anzupassen.

6. Vorrichtung (20) gemäß Anspruch 5, wobei das Kontrollmodul (26) ausgebildet ist, um Funkressourcen der Zugriffsverbindung (220) zu verwalten und um eine Zuweisung der Funkressourcen der Zugriffsverbindung (220) an den zumindest einen mobilen Sendeempfänger (500) basierend auf der Information bezüglich der Kapazität durchzuführen.

7. Vorrichtung (20) gemäß einem der Ansprüche 5 oder 6, wobei das Kontrollmodul (26) ausgebildet ist, um einen Datendurchsatz der Zugriffsverbindung (220) einzustellen, der niedriger ist, als ein Datendurchsatz der Anbindungsverbindung (120).

8. Ein Relay-Sendeempfänger (300) mit einem Anbindungs-Sendeempfänger (100) mit einer Vorrichtung gemäß Anspruch 1 und einem Basisstations-Sendeempfänger (200) mit einer Vorrichtung gemäß Anspruch 5.

9. Ein Fahrzeug (600) mit einem Relay-Sendeempfänger (300) gemäß Anspruch 8.

10. Fahrzeug gemäß Anspruch 9, welches zumindest ein Datenmodul (700) umfasst, wobei das Datenmodul (700) ausgebildet ist, um Daten über die Anbindungsverbindung (120) zu kommunizieren.

11. Ein Verfahren für einen Anbindungs-Sendeempfänger (100) eines Relay-Sendeempfängers (300) in einem Mobilkommunikationssystem (400), wobei der Relay-Sendeempfänger (300) ferner einen Basisstations-Sendeempfänger (200) aufweist, umfassend
Kommunizieren (32) mit zumindest einem weiteren Basisstations-Sendeempfänger (210) des Mobilkommunikations-systems (400) über eine Anbindungsverbindung (120);
Kommunizieren (34) mit dem Basisstations-Sendeempfänger (200) des Relay-Sendeempfängers (300);
Bestimmen (36), über das Sendeempfängermodul (12), von Information bezüglich einer Kapazität der Anbindungsverbindung (120), wobei die Information bezüglich der Kapazität auf Messungen bezüglich einer Funkqualität der Anbindungsverbindung (120) und/oder auf einer dem Anbindungs-Sendeempfänger (100) von dem weiteren Basisstations-Sendeempfänger (210) zugewiesenen Datenkapazität auf der Anbindungsverbindung (120) basiert; und
Kommunizieren (38) der Information bezüglich der Kapazität an den Basisstations-Sendeempfänger (200) des Relay-Sendeempfängers (300).

12. Ein Verfahren für einen Basisstations-Sendeempfänger (200) eines Relay-Sendeempfängers (300) in einem Mobilkommunikationssystem (400), wobei der Relay-Sendeempfänger (300) ferner einen Anbindungs-Sendeempfänger (100) aufweist, umfassend
Kommunizieren (42) mit zumindest einem mobilen Sendeempfänger (500) des Mobilkommunikationssystems (400) über eine Zugriffsverbindung (220);
Kommunizieren (44) mit dem Anbindungs-Sendeempfänger (100) des Relay-Sendeempfängers (300);
Erhalten (46) von Information bezüglich einer Kapazität einer Anbindungsverbindung (120) zwischen dem Anbindungs-Sendeempfänger (100) und einem weiteren Basisstations-Sendeempfänger (210) des Mobilkommunikationssystems (400), wobei die Information bezüglich der Kapazität auf Messungen bezüglich einer Funkqualität der Anbindungsverbindung (120) und/oder auf einer dem Anbindungs-Sendeempfänger (100) von dem weiteren Basisstations-Sendeempfänger (210) zugewiesenen Datenkapazität auf der Anbindungsverbindung (120) basiert; und
Anpassen (48) einer Kapazität der Zugriffsverbindung (220) an die Kapazität der Anbindungsverbindung (120).

13. Computerprogramm mit einem Programmcode zum Durchführen zumindest einer der Verfahren nach Ansprüchen 11 oder 12, wenn der Programmcode auf einem Computer, einem Prozessor, einem Controller oder einer programmierbaren Hardwarekomponente ausgeführt wird.
